# EUROPÄISCHE PATENTANMELDUNG

(11) **EP 4 589 167 A1**
(43) Veröffentlichungstag der Anmeldung: **23.07.2025**
(21) Anmeldenummer: 24220871.8
(22) Anmeldetag: 18.12.2024
(51) Int. Cl.: F16F 9/348, F16F 9/34, F16F 9/18

(54) **BODENVENTIL FÜR EINEN TELESKOPDÄMPFER SOWIE TELESKOPDÄMPFER**

(30) Priorität: 11.01.2024 DE 102024200236
(71) Anmelder: ZF Friedrichshafen AG, 88046 Friedrichshafen (DE)
(72) Erfinder: Treubert, Manuel, 97723 Oberthulba (DE); Siegler, Steffen, 97225 Zellingen (DE)
(74) Vertreter: ZF Friedrichshafen AG

(57) **Zusammenfassung**

Die Erfindung betrifft Bodenventil (2), umfassend einen Ventilkörper (7) mit einer ersten Seite (8) und einer zweiten Seite (9), wobei der Ventilkörper (7) dazu ausgestaltet ist, in einem verbauten Zustand des Bodenventils (2) in einem Teleskopdämpfer (1) einen auf der ersten Seite (8) liegenden Arbeitsraum (6) des Teleskopdämpfers (1) von einem auf der zweiten Seite (9) liegenden Teil (5) eines Ausgleichsraums (4) des Teleskopdämpfers (1) abzuteilen. In dem Ventilkörper (7) ist mindestens eine Drosselbohrung (11) ausgestaltet, über welche jeweils lediglich je eine Fluidströmung von der ersten Seite (8) des Ventilkörpers (7) in Richtung der zweiten Seite (9) darstellbar ist, wohingegen je eine entgegengesetzte Fluidströmung über die mindestens eine Drosselbohrung (11) unterbunden ist. Zudem ist ein Trennelement (19) vorgesehen ist, welches gemeinsam mit dem Ventilkörper (7) mindestens einen zwischenliegenden Raum (20) begrenzt, wobei der mindestens eine zwischenliegende Raum (20) dabei zumindest an je einer, der zweiten Seite (9) des Ventilkörpers (7) zugewandten Mündung der mindestens einen Drosselbohrung (11) begrenzt und dabei von einem Ausgleichsbereich (21) abgegrenzt ist, in welchem im verbauten Zustand des Bodenventils (2) im Teleskopdämpfer (1) der Teil (5) des Ausgleichsraums (4) vorgesehen ist. Zwischen dem mindestens einen zwischenliegenden Raum (20) und dem Ausgleichsbereich (21) ist Fluid über mindestens einen Übergang austauschbar.

## Beschreibung

Die Erfindung betrifft ein Bodenventil für einen Teleskopdämpfer, umfassend einen Ventilkörper mit einer ersten Seite und einer zweiten Seite, wobei der Ventilkörper dazu ausgestaltet ist, in einem verbauten Zustand des Bodenventils im Teleskopdämpfer einen auf der ersten Seite liegenden Arbeitsraum des Teleskopdämpfers von einem auf der zweiten Seite liegenden Teil eines Ausgleichsraums des Teleskopdämpfers abzuteilen, wobei in dem Ventilkörper mindestens eine Drosselbohrung ausgestaltet ist, über welche jeweils lediglich je eine Fluidströmung in Richtung der zweiten Seite darstellbar ist, wohingegen je eine entgegengesetzte Fluidströmung über die mindestens eine Drosselbohrung in Richtung der ersten Seite unterbunden ist, und wobei ein Trennelement vorgesehen ist, welches gemeinsam mit dem Ventilkörper mindestens einen zwischenliegenden Raum begrenzt. Des Weiteren betrifft die Erfindung einen Teleskopdämpfer mit einem vorgenannten Bodenventil.

Bei Fahrwerken von Kraftfahrzeugen ist die Verwendung von Teleskopdämpfern bekannt, welche dabei zumeist als Ein- oder als Zweirohrdämpfer ausgeführt werden. Bei einem Zweirohrdämpfer ist dabei üblicherweise ein Arbeitszylinder in einem umliegenden Behälterrohr aufgenommen, wobei der Arbeitszylinder und das Behälterrohr dabei einen zwischenliegenden, überwiegend ringförmig gestalteten Ausgleichsraum definieren. In dem Arbeitszylinder ist ein Arbeitskolben verschiebbar geführt, durch welchen ein Innenraum des Arbeitszylinders in zwei Arbeitsräume unterteilt wird und der mit einer Kolbenstange verbunden ist. Die Kolbenstange ist dabei aus dem Arbeitszylinder und dem Behälterrohr herausgeführt und bildet üblicherweise einen Befestigungspunkt des Zweirohrdämpfers, während ein weiterer Befestigungspunkt entgegengesetzt hierzu an dem Behälterrohr ausgestaltet ist. In einer Zugstufe des Zweirohrdämpfers, d.h. einem Auseinanderziehen des Zweirohrdämpfers, wird eine Dämpfung zumeist im Wesentlichen über ein Kolbenventil verwirklicht, mit welchem der Arbeitskolben ausgestattet ist. Dabei setzt das Kolbenventil einem über das Kolbenventil zwischen den Arbeitsräumen strömenden Fluid einen Widerstand entgegen, so dass eine Aufwärtsbewegung des Kolbens abgebremst wird. Hingegen wird über ein Bodenventil, über welches der Innenraum des Arbeitszylinders und der Ausgleichsraum im Bereich des Behälterrohrs voneinander abgeteilt sind, in der Zugstufe ein nahezu ungehindertes Nachströmen von Fluid aus dem Ausgleichsraum in den Innenraum des Arbeitszylinders ermöglicht. In einer Druckstufe des Zweirohrdämpfers, d.h. einem Zusammendrücken des Zweirohrdämpfers, wird eine Dämpfung dann zumindest teilweise durch das Bodenventil erzeugt, welches einem Verdrängen von Fluid aus dem Innenraum des Arbeitszylinders in den Ausgleichsraum einen Widerstand entgegensetzt, während über das Kolbenventil üblicherweise ein niedrigerer Strömungswiderstand erzeugt wird.

Aus der DE 10 2019 212 964 A1 geht ein Teleskopdämpfer mit einem Bodenventil hervor, welches an einem Ende eines Arbeitszylinders des Teleskopdämpfers angeordnet ist. Das Bodenventil weist einen Ventilkörper auf, welcher einen Arbeitsraum des Arbeitszylinders von einem Ausgleichsraum abteilt, der zwischen dem Arbeitszylinder und einem umliegenden Behälterrohr gebildet ist. In den Ventilkörper sind mehrere Durchgangsöffnungen in Form von Bohrungen und Drosselbohrungen eingebracht. Über die Bohrungen kann dabei ein Strömen von Fluid von der dem Ausgleichsraum zugewandten Seite des Ventilkörpers zu der dem Arbeitsraum zugewandten Seite erfolgen, während eine hierzu entgegengesetzte Strömungsrichtung über die Bohrungen mittels einer Abdeckscheibe unterbunden wird. Hingegen wird über die Drosselbohrungen nur jeweils eine gedrosselte Fluidströmung von der dem Arbeitsraum zugewandten Seite in den Ausgleichsraum ermöglicht, wobei an Mündungen der Drosselbohrungen auf Seiten des Ausgleichsraumes dabei Federscheiben vorgesehen sind, die eine hierzu entgegengesetzte Strömung des Fluids über die Drosselbohrungen verhindern. Auf Seiten des Arbeitsraumes ist das Bodenventil zudem mit einem beweglichen Trennelement ausgestattet, welches gemeinsam mit dem Ventilkörper einen zwischenliegenden Raum begrenzt. Auch an dem Trennelement sind dabei Durchgangsöffnungen ausgebildet, wobei über das Trennelement im Zusammenspiel mit dem Ventilkörper zudem ein Spalt für einen Übergang für Fluid definiert wird. Dabei soll über das Bodenventil eine größere Gestaltungsmöglichkeit bei der Anpassung einer Dämpfcharakteristik ermöglicht werden.

Ausgehend vom vorstehend beschriebenen Stand der Technik ist es nun die Aufgabe der vorliegenden Erfindung ein Bodenventil zu schaffen, über welches bei Anwendung bei einem Teleskopdämpfer eine Geräuschreduzierung in der Druckstufe erreicht werden kann.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein Teleskopdämpfern, bei welchem ein erfindungsgemäßes Bodenventil vorgesehen ist, ist ferner Gegenstand von Anspruch 16.

Gemäß der Erfindung umfasst ein Bodenventil einen Ventilkörper mit einer ersten Seite und einer zweiten Seite. Dabei ist der Ventilkörper dazu ausgestaltet, in einem verbauten Zustand des Bodenventils im Teleskopdämpfer einen auf der ersten Seite liegenden Arbeitsraum des Teleskopdämpfers von einem auf der zweiten Seite liegenden Teil eines Ausgleichsraums des Teleskopdämpfers abzuteilen. In dem Ventilkörper ist mindestens eine Drosselbohrung ausgestaltet, über welche jeweils lediglich je eine Fluidströmung von der ersten Seite des Ventilkörpers in Richtung der zweiten Seite dargestellt werden kann, wohingegen je eine entgegengesetzte Fluidströmung über die mindestens eine Drosselbohrung unterbunden ist. Zudem ist ein Trennelement vorgesehen, welches gemeinsam mit dem Ventilkörper einen zwischenliegenden Raum begrenzt.

Der Ventilkörper des erfindungsgemäßen Bodenventils ist also dazu ausgebildet, im verbauten Zustand des Bodenventils in einem Teleskopdämpfer einen Arbeitsraum und einen Ausgleichsraum voneinander abzuteilen, d.h. räumlich voneinander zu trennen. Insofern ist das Bodenventil für die Anwendung bei einem Zweirohrdämpfer vorgesehen. Dieses Abteilen bzw. Trennen der Räume erfolgt dabei dadurch, dass der Ventilkörper im verbauten Zustand des Bodenventils im Teleskopdämpfern zwischen den Räumen liegend platziert ist und hierdurch alleine das Abteilen bzw. Trennen herbeiführen kann. Bevorzugt ist der Ventilkörper des Bodenventils dabei für eine Befestigung an einem Rohrende eines Arbeitszylinders des Teleskopdämpfers ausgestaltet.

In dem Ventilkörper ist mindestens eine Drosselbohrung ausgestaltet, über welche eine Fluidströmung von der ersten Seite in Richtung der zweiten Seite stattfinden kann, während eine hierzu entgegengesetzte Fluidströmung über die mindestens eine Drosselbohrung verhindert ist. Die mindestens eine Drosselbohrung durchdringt den Ventilkörper hierzu bevorzugt axial. Außerdem ist die mindestens eine Drosselbohrung insbesondere von ihrer Geometrie her so gestaltet, dass eine Drosselung der Fluidströmung bei Führung von der ersten Seite in Richtung der zweiten Seite des Ventilkörpers stattfindet. An je einer Mündung der mindestens einen Drosselbohrung an der ersten Seite des Ventilkörpers kann zudem eine Vordrosselung vorgenommen sein, welche dabei insbesondere in Form einer Drosselscheibe verwirklicht sein kann. Besonders bevorzugt sind in dem Ventilkörper mehrere Drosselbohrungen ausgestaltet, über welche zueinander parallele Fluidströmungen in Richtung der zweiten Seite dargestellt werden können. Bei dem Fluid handelt es sich insbesondere um Öl, mit dem der Teleskopdämpfer befüllt ist.

Mit "axial" ist bei dem Bodenventil eine Orientierung parallel zu einer Achse gemeint, welche im verbauten Zustand des Fahrwerkschwingungsdämpferventils parallel zu oder sogar deckungsgleich mit einer Längsmittelachse des Fahrwerkschwingungsdämpfers platziert wird. Das Bodenventil ist bevorzugt im Wesentlichen rotationssymmetrisch gestaltet, so dass es sich bei der Achse dann um eine Rotationsachse des Bodenventils handelt. "Radial" bedeutet im Sinne der Erfindung eine Orientierung in Durchmesserrichtung eines jeweiligen Bauteils.

Der Ventilkörper begrenzt gemeinsam mit einem Trennelement einen zwischenliegenden Raum, d.h. der zwischenliegende Raum wird zwischen dem Ventilkörper und dem Trennelement eingegrenzt. Bevorzugt liegt das Trennelement dabei als zum Ventilkörper separates Bauteil vor, wodurch die Definition des zwischenliegenden Raumes über diese beiden separaten Bauteile auf einfache Art und Weise realisiert werden kann. Im Rahmen der Erfindung könnten der Ventilkörper und das Trennelement aber ggf. auch einstückig ausgeführt sein.

Die Erfindung umfasst nun die technische Lehre, dass der mindestens eine zwischenliegende Raum zumindest an je einer, der zweiten Seite des Ventilkörpers zugewandten Mündung der mindestens einen Drosselbohrung begrenzt und dabei von einem Ausgleichsbereich abgegrenzt ist, in welchem im verbauten Zustand des Bodenventils im Teleskopdämpfer der Teil des Ausgleichsraums vorgesehen ist. Zwischen dem mindestens einen zwischenliegenden Raum und dem Ausgleichsbereich kann dabei Fluid über mindestens einen Übergang ausgetauscht werden.

Mit anderen Worten ist der mindestens eine zwischenliegende Raum auf der zweiten Seite des Ventilkörpers durch den Ventilkörper und das Trennelement gemeinsam eingegrenzt, wobei dabei die mindestens eine Drosselbohrung seitens der zweiten Seite des Ventilkörpers jeweils in dem mindestens einen zwischenliegenden Raum mündet. Durch den Ventilkörper und das Trennelement ist hierbei eine Abteilung des mindestens einen Raumes von einem Ausgleichsbereich vorgenommen, in welchem dann im verbauten Zustand des Bodenventils im Teleskopdämpfer der Teil des Ausgleichsraums vorgesehen ist. Außerdem besteht über mindestens einen Übergang die Möglichkeit eines Austauschs von Fluid zwischen dem mindestens einen Raum und dem Ausgleichsbereich.

Eine derartige Ausgestaltung eines Bodenventils hat dabei den Vorteil, dass dadurch bei einer Führung von Fluid von der ersten Seite in den Ausgleichsbereich, d.h. im verbauten Zustand des Bodenventils von dem Arbeitsraum in den Ausgleichsraum, zunächst der mindestens eine Raum von dem Fluid durchströmt wird. Dies bewirkt einen gestuften Druckabbau beim Übergang des aus der mindestens einen Drosselbohrung ausströmendem, gedrosselten Fluids in den Ausgleichsbereich und resultiert letztendlich in einer Geräuschreduzierung. Denn dadurch kommt es beim Strömen von Fluid von der ersten Seite in den Ausgleichsbereich zu einer schrittweisen Druckabsenkung, indem in einem ersten Schritt eine Druckabsenkung in dem zwischenliegenden Raum unmittelbar im Anschluss an die mindestens eine Drosselbohrung erfolgt sowie in einem zweiten Schritt eine weitere Druckabsenkung beim Abströmen von Fluid aus dem zwischenliegenden Raum in den Ausgleichsbereich stattfindet. Insgesamt können hierdurch Geräusche eines Teleskopdämpfers in dessen Druckstufe reduziert werden.

Wesentlich für die Erfindung ist dabei, dass durch die Begrenzung des Raumes zwischen dem Ventilkörper und dem Trennelement sowie dessen Abteilung von dem Ausgleichsbereich erreicht wird, dass über die mindestens eine Drosselbohrung strömendes Fluid zunächst den zwischenliegenden Raum durchströmen muss, bevor das Fluid weiter in den Ausgleichsbereich gelangen kann. Dieses Weitergelangen in den Ausgleichsbereiches kann dabei über den mindestens einen Übergang ermöglicht werden.

Bei dem Ausgleichsbereich des Bodenventils handelt es sich um einen Bereich, in welchem in Bezug auf das verbaute Bodenventil der unterhalb des Bodenventils liegende Teil des Ausgleichsraums vorhanden ist.

Bevorzugt ist zwischen dem Ventilkörper und dem Trennelement genau ein zwischenliegender Raum begrenzt, in welchem die mindestens eine Drosselbohrung mündet. Bei der bevorzugten Ausführungsform des Ventilkörpers, bei welcher mehrere Drosselbohrungen im Ventilkörper ausgestaltet sind, münden dann alle Drosselbohrungen jeweils in dem genau einen zwischenliegenden Raum. Es ist im Rahmen der Erfindung aber auch denkbar, dass bei mehreren Drosselbohrungen jeweils ein zugeordneter Raum im Bereich der jeweiligen Mündung der einzelnen Drosselbohrung begrenzt wird.

Ein jeweiliger Austausch von Fluid über den mindestens einen Übergang kann im Rahmen der Erfindung permanent ermöglicht sein, so dass Fluid also ständig aus dem mindestens einen zwischenliegenden Raum in den Ausgleichsbereich abströmen kann. Der gestufte Druckabbau wird hierbei dann insbesondere durch eine Strömungsumlenkung hervorgerufen. Alternativ dazu kann ein jeweiliger Austausch von Fluid über den mindestens einen Übergang aber auch zustandsabhängig gestaltet sein. Dabei findet ein Abströmen von Fluid aus dem mindestens einen zwischenliegenden Raum in den Ausgleichsbereich dann nicht permanent statt, sondern erfolgt nur in bestimmten Zuständen, bei welchen es sich bevorzugt um bestimmte Strömungsverhältnisse oder bestimmte Druckverhältnissen zwischen dem mindestens einen zwischenliegenden Raum und dem Ausgleichsbereich handelt.

Entsprechend einer Ausführungsform der Erfindung ist das Trennelement auf den Ventilkörper auf dessen zweiter Seite aufgesetzt, wobei der mindestens eine Übergang als je ein permanenter Übergang je ein Strömen von Fluid aus dem mindestens einen zwischenliegenden Raum in den Ausgleichsbereich unter Strömungsumlenkung dieses Fluids ermöglicht. In vorteilhafter Weise kann hierdurch ein einfacher Aufbau realisiert und aufgrund der Strömungsumlenkung zudem ein gestufter Druckabbau beim Abströmen von Fluid in den Ausgleichsbereich verwirklicht werden.

In Weiterbildung der vorgenannten Ausführungsform ist das Trennelement topfartig gestaltet und in eine Ausnehmung eingesetzt, mit welcher der Ventilkörper auf der zweiten Seite versehen ist und in der die mindestens eine Drosselbohrung mündet. Hierdurch ist ein kompakter Aufbau des Bodenventils möglich, indem das topfartige Trennelement seitens des Ventilkörpers in eine entsprechende Ausnehmung eingesetzt ist und aufgrund seiner Topform gemeinsam mit dem Ventilkörper den zwischenliegenden Raum im Bereich derje einen Mündung der mindestens einen Drosselbohrung definiert.

Bevorzugt weist das topfartige Trennelement dabei einen hohlzylindrischen Abschnitt auf, an welchen sich ein radial verlaufender Bodenabschnitt anschließt. Hierbei ist das Trennelement über den hohlzylindrischen Abschnitt in der Ausnehmung des Ventilkörpers gehalten, bevorzugt in die Ausnehmung des Ventilkörpers eingepresst. In Weiterbildung dieser Variante ist dann der je eine permanente Übergang durch einen Durchbruch gebildet, mit welchem der Bodenabschnitt des Trennelements versehen ist. Dabei ist die Strömungsumlenkung dadurch verwirklicht, dass der Durchbruch zu je einer Fluidausströmrichtung, welche an derje einen Mündung der mindestens einen Drosselbohrung definiert ist, radial zurückgesetzt liegt. Hierdurch kann ein geeigneter, permanenter Übergang aus dem mindestens einen Raum in den Ausgleichsbereich geschaffen werden, wobei hierbei eine Strömungsumlenkung des über den Durchbruch strömenden Fluids hervorgerufen wird. Bevorzugt ist der Durchbruch dabei zentrisch am Bodenabschnitt ausgestaltet. Zudem ist insbesondere im Bereich des Durchbruchs ein ringförmiger Spalt gebildet, um zum einen eine ausreichende Abgrenzung des mindestens einen Raumes vom Ausgleichsbereich zu realisieren und damit den gestuften Druckabbau zu verwirklichen, zum anderen aber dennoch einen permanenten Übergang für Fluid zu bilden. So kann dieser Spalt zwischen dem, bevorzugt zentrischen Durchbruch und einem in den Durchbruch einragenden Schraubbolzen des Bodenventils verwirklicht sein.

Alternativ oder ergänzend dazu weist der je eine permanente Übergang einen Spalt auf, welcher zwischen dem hohlzylindrischen Abschnitt und einem Bodenbereich der Ausnehmung des Ventilkörpers ausgestaltet ist, wobei über den Spalt ein Durchgang in eine Aussparung besteht, mit welcher der hohlzylindrische Abschnitt radial außen versehen ist. Dabei ruft der hohlzylindrische Abschnitt die Strömungsumlenkung von in den Spalt einströmendem und in die Ausnehmung weiterströmendem Fluid hervor. Hierdurch kann alternativ oder ergänzend zu dem Durchbruch des Bodenabschnitts ebenfalls ein geeigneter, permanenter Übergang aus dem mindestens einen Raum in den Ausgleichsbereich geschaffen werden, wobei über diesen permanenten Übergang dabei bei Fluidführung die Strömungsumlenkung zur Darstellung des gestuften Druckabbaus erzeugt wird. Insbesondere ist die Aussparung dabei umlaufend ausgestaltet sowie axial über einen Befestigungsbereich bzw. einen Pressbereich begrenzt, an welchem das topfartige Trennelement radial außen an dem Ventilkörper umlaufend gehalten ist. Zudem kann über die Aussparung je eine Verbindung zu mindestens einer Tasche hergestellt sein, mit welcher der Ventilkörper auf der zweiten Seite versehen ist und die mit dem Ausgleichsbereich verbunden ist. Hierdurch wird ein Weiterströmen des in die Aussparung geführten Fluids in den Ausgleichsbereich ermöglicht.

Es ist eine weitere Variante der Erfindung, dass in das Trennelement mindestens eine Bohrung eingebracht ist, über welche jeweils lediglich je eine Fluidströmung von dem Ausgleichsbereich in den mindestens einen zwischenliegenden Raum dargestellt werden kann, wohingegen je eine entgegengesetzte Fluidströmung über die mindestens eine Bohrung von dem zwischenliegenden Raum in den Ausgleichsbereich unterbunden ist. Dadurch kann in einer Zugstufe des Teleskopdämpfers ein im Wesentlichen ungehindertes Nachsaugen von Fluid aus dem Ausgleichsraum in den zwischenliegenden Raum dargestellt werden, um hieraus dann im Weiteren eine Zuführung des Fluids zum Arbeitsraum des Teleskopdämpfers vornehmen zu können. Insbesondere ist das Unterbinden der entgegengesetzten Fluidströmung dabei über eine Abdeckscheibe vorgenommen, welche auf Seiten des mindestens einen zwischenliegenden Raumes auf der je einen Mündung der mindestens einen Bohrung aufliegt. Bei der topfartigen Gestaltung des Trennelements ist die mindestens eine Bohrung dann bevorzugt im Bodenabschnitt ausgestaltet.

Gemäß einer alternativen Ausgestaltungsmöglichkeit der Erfindung liegt das Trennelement als ein weiterer Ventilkörper vor, welcher den mindestens einen zwischenliegenden Raum auf der zweiten Seite des Ventilkörpers von dem Ausgleichsbereich abteilt, wobei je eine Durchgangsöffnung des weiteren Ventilkörpers den mindestens einen Übergang bildet. Bei dieser Ausgestaltungsmöglichkeit der Erfindung ist also neben dem Ventilkörper noch ein weiterer Ventilkörper vorgesehen, wobei die beiden Ventilkörper dabei zwischen sich den mindestens einen zwischenliegenden Raum einschließen. Dabei nimmt der Ventilkörper je eine Abteilung dieses mindestens einen Raumes zu der ersten Seite hin vor, während der weitere Ventilkörper den mindestens einen Raum von dem Ausgleichsbereich abteilt. Hierdurch ist ein weitgehendes Einschließen des mindestens einen zwischenliegenden Raumes möglich, wodurch der gestufte Druckabbau sich besonders effektiv erreichen lässt.

Besonders bevorzugt sind der Ventilkörper und der weitere Ventilkörper dabei zumindest weitestgehend identisch gestaltet, so dass durch die zumindest weitestgehende Ausführung der beiden Ventilkörper als Gleichteile der Herstellungsaufwand zur Realisierung des erfindungsgemäßen Bodenventils reduziert werden kann. "Zumindest weitestgehend" bedeutet hierbei im Sinne der Erfindung, dass die beiden Ventilkörper nur minimal voneinander abweichen. So unterscheiden sich die beiden Ventilkörper bevorzugt höchstens nur in jeweiligen Befestigungsbereichen, an welchem die Befestigung der Ventilkörper aneinander vorgenommen ist.

In Weiterbildung der vorgenannten Ausgestaltungsmöglichkeit ist die je eine, den mindestens einen Übergang bildende Durchgangsöffnung eine Drosselbohrung des weiteren Ventilkörpers, welche jeweils einerseits in dem mindestens einen zwischenliegenden Raum sowie andererseits in dem Ausgleichsbereich mündet. Hierdurch ist der mindestens eine Übergang als Drosselstelle gestaltet, wodurch ein Strömen von Fluid aus dem mindestens einen zwischenliegenden Raum in den Ausgleichsbereich ermöglicht und dabei der gestufte Druckabbau verwirklicht wird.

Alternativ, bevorzugt aber ergänzend dazu ist an einer jeweiligen Mündung der je einen Durchgangsöffnung des weiteren Ventilkörpers in dem Ausgleichsbereich zumindest eine Federscheibe angeordnet ist, welche an der jeweiligen Mündung derje einen Durchgangsöffnung federnd auf dem weiteren Ventilkörper aufliegt. Über die mindestens eine Federscheibe wird dabei ein Abströmen von Fluid aus dem mindestens einen zwischenliegenden Raum in den Ausgleichsbereich ermöglicht, hingegen aber eine Rückströmung über die je eine Durchgangsöffnung in den mindestens einen zwischenliegenden Raum unterbunden. Bevorzugt sind dabei in dem Ausgleichsbereich an der jeweiligen Mündung der je einen Durchgangsöffnung nur wenige Federscheiben oder sogar nur genau eine Federscheibe vorgesehen, um dem Abströmen von Fluid aus dem mindestens einen zwischenliegenden Raum in den Ausgleichsbereich einen möglichst niedrigen Widerstand entgegenzusetzen. Dabei ist insbesondere zusätzlich zu der mindestens einen Federscheibe noch eine Fängerscheibe vorgesehen, an welcher sich die wenigen Federscheiben oder die genau eine Federscheibe beim Abströmen von Fluid in den Ausgleichsbereich anlegen können bzw. kann. Zudem kann zusätzlich zu der mindestens einen Federscheibe noch eine Voröffnungsscheibe vorgesehen sein, über welche ein konstanter Durchfluss in den Ausgleichsbereich ermöglicht wird.

Weiter alternativ oder ergänzend sind der Ventilköper und der weitere Ventilkörper über ein hohlzylindrisches Verbindungselement miteinander verbunden. Hierdurch wird eine geeignete Verbindung der beiden Ventilkörper verwirklicht, wobei hierdurch problemlos ein vormontierbares Bodenventil geschaffen werden kann. Zudem kann über das Verbindungselement ein zusätzliches Einschließen des mindestens einen Raumes realisiert werden. Bevorzugt ist der Ventilkörper in einem verbauten Zustand des Bodenventils an einem Rohrende eines Arbeitszylinders des Teleskopdämpfers gehalten und über das hohlzylindrisches Verbindungselement mit dem weiteren Ventilkörper verbunden. Das Verbindungselement ist insbesondere seitens des Ventilköpers und seitens des weiteren Ventilkörpers auf je einen Befestigungsabschnitt aufgeschoben, bevorzugt aufgepresst. Alternativ kommt aber im Rahmen der Erfindung auch eine einstückige Ausführung des hohlzylindrischen Verbindungselements mit dem Ventilkörper oder dem weiteren Ventilkörper in Betracht.

Es ist eine weitere Ausgestaltungsmöglichkeit der Erfindung, dass der Ventilkörper zudem mit mindestens einer Bohrung versehen ist, welche an der ersten Seite mündet. An der jeweiligen Mündung der mindestens einen Bohrung ist dabei eine Abdeckscheibe platziert, welche die jeweilige Mündung bei einer Fluidströmung von der ersten Seite zu dem Ausgleichsbereich abdeckt sowie bei einer hierzu entgegengesetzten Fluidströmung von dem Ausgleichsbereich zu der ersten Seite freigibt. In vorteilhafter Weise kann hierdurch ein Strömen von Fluid von dem Ausgleichsbereich zu der ersten Seite ermöglicht werden. Besonders bevorzugt mündet die mindestens eine Bohrung dabei neben der ersten Seite in dem mindestens einen zwischenliegenden Raum, wobei aus dem Ausgleichsbereich dabei ein nahezu ungehindertes Nachströmen von Fluid in den mindestens einen zwischenliegenden Raum geschaffen ist. Verfügt das Bodenventil neben dem Ventilkörper noch über einen weiteren Ventilkörper, so ist auch der weitere Ventilkörper insbesondere mit mindestens einer derartigen Bohrung sowie einer zugehörigen Abdeckscheibe ausgestattet.

In Weiterbildung der Erfindung ist an einer jeweiligen Mündung der mindestens einen Drosselbohrung des Ventilkörpers im mindestens einen zwischenliegenden Raum je mindestens eine Federscheibe vorgesehen, welche jeweils an der jeweiligen Mündung der mindestens einen Drosselbohrung federnd an dem Ventilkörper aufliegt. Hierdurch kann ein gedrosseltes Strömen von Fluid in Richtung der zweiten Seite dargestellt sowie eine entgegengesetzte Fluidströmung zuverlässig unterbunden werden.

Gegenstand der Erfindung ist zudem ein Teleskopdämpfer, bei welchem es sich insbesondere um einen Fahrwerkschwingungsdämpfer handelt. Dabei umfasst dieser Teleskopdämpfer mindestens ein Bodenventil nach einem oder mehreren der vorstehend beschriebenen Varianten aufweist. Unter einem "Fahrwerkschwingungsdämpfer" ist dabei im Rahmen der Erfindung ein Schwingungsdämpfer zu verstehen, welcher für die Anwendung in einem Fahrwerk eines Kraftfahrzeuges vorgesehen ist. Insbesondere weist der Teleskopdämpfer dabei einen Arbeitszylinder auf, welcher in einem Behälterrohr aufgenommen ist und gemeinsam mit dem Behälterrohr einen Ausgleichsraum definiert. Insofern ist der Teleskopdämpfer dann als Zweirohrdämpfer gestaltet. An dem Arbeitszylinder ist ein erfindungsgemäßes Bodenventil aufgenommen, welches einen Arbeitsraum des Arbeitszylinders von dem Ausgleichsraum abteilt. Über das erfindungsgemäße Bodenventil wird dabei in einer Druckstufe des Teleskopdämpfers ein gestufter Druckabbau beim Abführen von Fluid aus dem Arbeitsraum in den Ausgleichsraum hervorgerufen und damit eine Geräuschreduzierung erreicht. Bei dem Fluid handelt es sich hierbei insbesondere um Öl.

Vorteilhafte Ausführungsformen der Erfindung, die nachfolgend erläutert werden, sind in den Zeichnungen dargestellt. Es zeigt:
- Fig. 1: eine Schnittansicht eines Teils eines Teleskopdämpfers im Bereich eines Bodenventils entsprechend einer ersten Ausführungsform der Erfindung, gezeigt in einer Druckstufe des Teleskopdämpfers;
- Fig. 2: eine perspektivische Ansicht des Bodenventils aus Fig. 1; und
- Fig. 3 und 4: Schnittansichten eines Bodenventils gemäß einer zweiten Ausgestaltungsmöglichkeit der Erfindung.

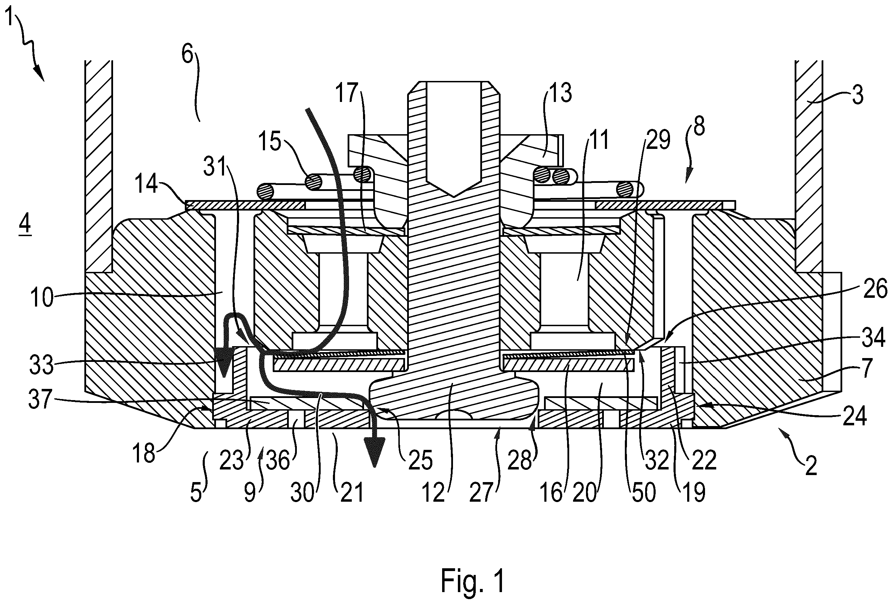

Aus Fig. 1 geht eine Schnittansicht eines Teils eines Teleskopdämpfers 1 hervor, bei welchem es sich insbesondere um einen Fahrwerkschwingungsdämpfer handelt. Dabei ist der Teleskopdämpfer 1 im Bereich eines Bodenventils 2 dargestellt, welches entsprechend einer ersten Ausführungsform der Erfindung ausgestaltet und an einem Rohrende eines Arbeitszylinders 3 des Teleskopdämpfers 1 angeordnet ist. In dem Arbeitszylinder 3 ist auf dem Fachmann prinzipiell bekannte Weise ein - vorliegend in dem dargestellten Bereich nicht zu sehender - Kolben verschiebbar geführt, wobei der Arbeitszylinder 3 von einem - in Fig. 1 ebenfalls nicht zu sehenden - Behälterrohr umgeben ist, welches gemeinsam mit dem Arbeitszylinder 3 einen zwischenliegenden Ausgleichsraum 4 definiert. Dieser Ausgleichsraum 4 liegt dabei zum einen als ringförmiger Teilraum radial umliegend zum Arbeitszylinder 3 sowie zum anderen als Teil 5 vor, der hierbei stirnseitig des Arbeitszylinders 3 definiert ist.

Das Bodenventil 2 trennt den Ausgleichsraum 4 von einem innerhalb des Arbeitszylinders 2 definierten Arbeitsraum 6, in welchem auch der Kolben verschiebbar geführt und der vollständig mit einem Fluid in Form von Öl gefüllt ist. Hingegen ist der Ausgleichsraum 4 teilweise mit Öl und teilweise mit Luft oder Gas gefüllt. Das Bodenventil 2 umfasst einen Ventilkörper 7, über welchen die Trennung des Ausgleichsraumes 4 von dem Arbeitsraum 6 vorgenommen ist. Dabei liegt der Arbeitsraum 6 auf einer ersten Seite 8 des Ventilkörpers 7, während der Teil 5 des Ausgleichsraumes 4 auf einer zweiten Seite 9 des Ventilkörpers 7 vorgesehen ist. In den Ventilkörper 7 sind mehrere Bohrungen 10 und mehrere Drosselbohrungen 11 eingebracht, die jeweils axial verlaufend in dem Ventilkörper 7 ausgestaltet sind. Dabei münden sowohl die Bohrungen 10, als auch die Drosselbohrungen 11 jeweils zum einen an der ersten Seite 8 des Ventilkörpers 7 sowie zum anderen auch jeweils seitens der zweiten Seite 9 des Ventilkörpers 7. Außerdem ist durch den Ventilkörper 7 ein Schraubbolzen oder eine Niet 12 axial hindurchgeführt, welcher über eine Mutter 13 gegen den Ventilkörper 7 vorgespannt ist.

An den Mündungen der Bohrungen 10 auf der ersten Seite 8 ist an dem Ventilkörper 7 eine Abdeckscheibe 14 vorgesehen, die über ein Federelement 15 gegen den Ventilkörper 7 vorgespannt ist. Das Federelement 15 stützt sich dabei an der Mutter 13 ab. In einer Zugstufe des Teleskopdämpfers 1, d.h. bei einem Auseinanderziehen des Teleskopdämpfers 1, wird ein Nachsaugen von Öl aus dem Ausgleichsraum 4 in den Arbeitsraum 6 über die Bohrungen 10 ermöglicht, indem die Abdeckscheibe 14 entgegen der durch das Federelement 15 erzeugten Vorspannung zumindest teilweise von dem Ventilkörper 7 abhebt und damit die Mündungen der Bohrungen 10 auf der ersten Seite 8 freigibt. Hingegen verdeckt die Abdeckscheibe 14 die Mündungen der Bohrungen 10 auf der ersten Seite 8 in einer Druckstufe des Teleskopdämpfers 1, d.h. bei einem Zusammendrücken des Teleskopdämpfers 1. Somit wird in diesem Fall ein Strömen von Öl aus dem Arbeitsraum 6 in den Ausgleichsraum 4 über die Bohrungen 10 unterbunden.

Dieses Verdrängen von Öl aus dem Arbeitsraum 6 in den Ausgleichsraum 4 in der Druckstufe des Teleskopdämpfers 1 wird über die Drosselbohrungen 11 ermöglicht, an deren Mündungen seitens der zweiten Seite 9 des Ventilkörpers 7 mehrere Federscheiben 16 vorgesehen sind. Die Federscheiben 16 bilden dabei ein Federscheibenpaket und sind radial innen gemeinsam zwischen dem Ventilkörper 7 und dem Schraubbolzen bzw. der Niet 12 eingespannt. Hierbei ist zwischen den Federscheiben 16 und dem Ventilkörper 7 zudem noch eine Voröffnungsscheibe 50 platziert. Das Strömen von Öl aus dem Arbeitsraum 6 in den Ausgleichsraum 4 über die Drosselbohrungen 11 wird dabei durch Abheben der Federscheiben 16 vom Ventilkörper 11 an radialen Außenseiten der Federscheiben 16 ermöglicht, wodurch Mündungen der Drosselbohrungen 11 auf der zweiten Seite 9 freigegeben werden. Dabei nehmen die Drosselbohrungen 11 Drosselungen des jeweiligen Ölstroms vor und setzen damit dem Strömen des Öls ein Widerstand entgegen.

Vor einem Eintritt des Öls in die Mündungen der Drosselbohrungen 11 an der ersten Seite 8 des Ventilkörpers 7 findet dabei zudem eine Vordrosselung über eine Drosselscheibe 17 statt, welche radial innen an der ersten Seite 8 des Ventilkörpers 7 zwischen dem Ventilkörper 7 und der Mutter 13 gehalten und mit mehreren Durchgangsbohrungen versehen ist. In der Zugstufe verschließen die Federscheiben 16 hingegen die seitens der zweiten Seite 9 liegenden Mündungen der Drosselbohrungen 11 und unterbindet damit ein Strömen von Öl über die Drosselbohrungen 11 in Richtung der ersten Seite 8.

Sowohl die Bohrungen 10, als auch die Drosselbohrungen 11 münden seitens der zweiten Seite 9 des Ventilkörpers 7 in einer Ausnehmung 18, mit welcher der Ventilkörper 7 auf der zweiten Seite 9 versehen ist. In diese Ausnehmung 18 ist nun zudem ein Trennelement 19 eingesetzt, welches topfartig gestaltet ist und mit dem Ventilkörper 7 einen zwischenliegenden Raum 20 eingrenzt. Dieser zwischenliegende Raum 20 umgibt dabei die seitens der zweiten Seite 9 liegenden Mündungen der Drosselbohrungen 11 und ist gegenüber einem Ausgleichsbereich 21 abgegrenzt, in welchem der Teil 5 des Ausgleichsraumes 4 definiert ist. Dadurch strömt das über die Drosselbohrungen 11 in Richtung der zweiten Seite 9 geführte Öl zunächst in den zwischenliegenden Raum 20 ein.

Das Trennelement 19 setzt sich vorliegend aus einem hohlzylindrischen Abschnitt 22 und einem hieran anknüpfenden, radial verlaufenden Bodenabschnitt 23 zusammen, durch welche die topfartige Gestalt des Trennelements 19 verwirklicht ist. An dem hohlzylindrischen Abschnitt 22 ist dabei auch die Befestigung des Trennelements 19 am Ventilkörper 7 vollzogen, indem der hohlzylindrische Abschnitt 22 einen umlaufenden Pressebereich 24 bildet, mit welchem das Trennelement 19 in die Ausnehmung 18 des Ventilkörpers 7 eingepresst ist.

Um ein Abströmen des in den Raum 20 gelangten Öls in den Ausgleichsbereich 21 und damit auch in den Ausgleichsraum 4 zu ermöglichen, sind bei dem Bodenventil 2 Übergänge 25 und 26 realisiert, über die jeweils ein permanenter Austausch von Öl zwischen dem Raum 20 und dem Ausgleichsbereich 21 erfolgen kann. Der Übergang 25 ist dabei durch einen Durchbruch 27 gebildet, mit welchem der Bodenabschnitt 23 zentrisch durchsetzt ist und in den der Schraubbolzen 12 axial einragt. Hierdurch wird der Übergang 25 als ringförmiger Spalt 28 definiert, wobei dieser Spalt 28 hinsichtlich eines ringförmigen und für die Federscheiben 16 am Ventilkörper 7 ausgestalteten Ventilsitzes 29 nach radial innen versetzt ausgebildet ist. Dadurch liegt der Spalt 28 in Bezug auf Ausströmrichtungen, in welche das Öl jeweils aus den Drosselbohrungen 11 in den Raum 20 ausströmt, radial zurückgesetzt, wodurch das Öl für das weitere Abströmen über den Spalt 28 eine Strömungsumlenkung erfahren muss. Dies ist in Fig. 1 beispielhaft anhand des Pfeils 30 angedeutet, welcher einen Teilstrom eines über eine der Drosselbohrungen 11 geführten Ölstroms repräsentiert.

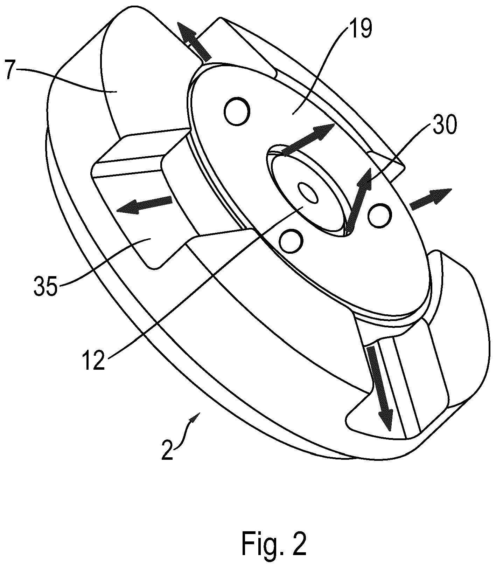

Der Übergang 26 weist zu Beginn einen ringförmigen Spalt 31 auf, welchen der hohlzylindrische Abschnitt 22 des Trennelements 19 gemeinsam mit einem Bodenbereich 32 der Ausnehmung 18 definiert. Dabei ist der Spalt 31 dann auch radial überdeckend mit den Mündungen der Bohrungen 10 auf der zweiten Seite 9 ausgestaltet. Wie anhand eines weiteren Pfeils 33 in Fig. 1 zu erkennen ist, wird ein als Pfeil 33 dargestellter, weiterer Teilstrom an Öl nach einem Abströmen über den Spalt 31 in eine umlaufende Aussparung 34 umgelenkt, mit welcher der hohlzylindrische Abschnitt 22 radial außen und axial angrenzend zu dem Pressebereich 24 versehen ist. Diese Strömungsumlenkung erfolgt dabei, da das Öl zudem in den Bohrungen 10 über die auf den Mündungen der Bohrungen 10 aufliegende Abdeckscheibe 14 gestaut wird. Im Weiteren kann das in die Aussparung 34 eingeströmte Öl dann über Taschen 35 in den Ausgleichsraum 4 gelangen, wobei die Taschen 35 dabei seitlich zu dem Trennelement 19 auf der zweiten Seite 9 des Ventilkörpers 7 ausgestaltet sind. Vorliegend sind die Taschen 35 hierbei in Fig. 2 zu sehen, in welcher eine perspektivische Einzelansicht des Bodenventils 2 dargestellt ist.

Aufgrund dieser Strömungsumlenkungen kommt es in der Druckstufe des Teleskopdämpfers 1 beim Abführen des Öls aus dem Arbeitsraum 6 in den Ausgleichsraum 4 zu einem gestuften Druckabbau, wodurch eine Geräuschreduzierung erreicht wird.

Wie zudem in Fig. 1 zu erkennen ist, sind in den Bodenabschnitt 23 des Trennelements 19 ferner Bohrungen 36 eingebracht, welche jeweils den Ausgleichsbereich 21 und damit den Ausgleichsraum 4 mit dem Raum 20 verbinden. Auf Seiten des Raumes 20 ist dabei eine Abdeckscheibe 37 vorgesehen, welche ein Strömen von Öl aus dem Raum 20 über die Bohrungen 36 in den Ausgleichsbereich 21 durch Abdecken der Bohrungen 36 verhindert. Findet hingegen ein Strömen von Öl aus dem Ausgleichsbereich 21 in den Raum 20 statt, so hebt die Abdeckscheibe 37 von den Bohrungen 36 ab, wodurch ein Nachsaugen von Öl in der Zugstufe des Teleskopdämpfers 1 in den Arbeitsraum 6 über die Bohrungen 10 erleichtert wird.

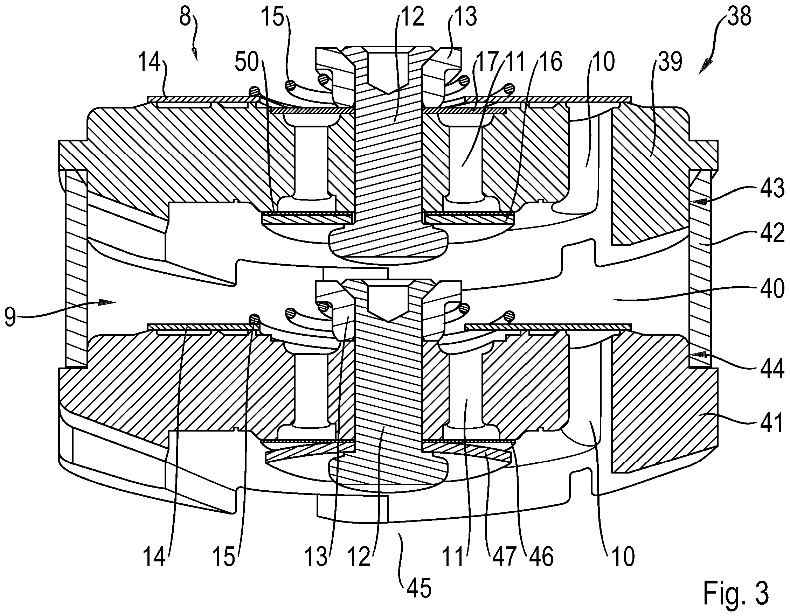

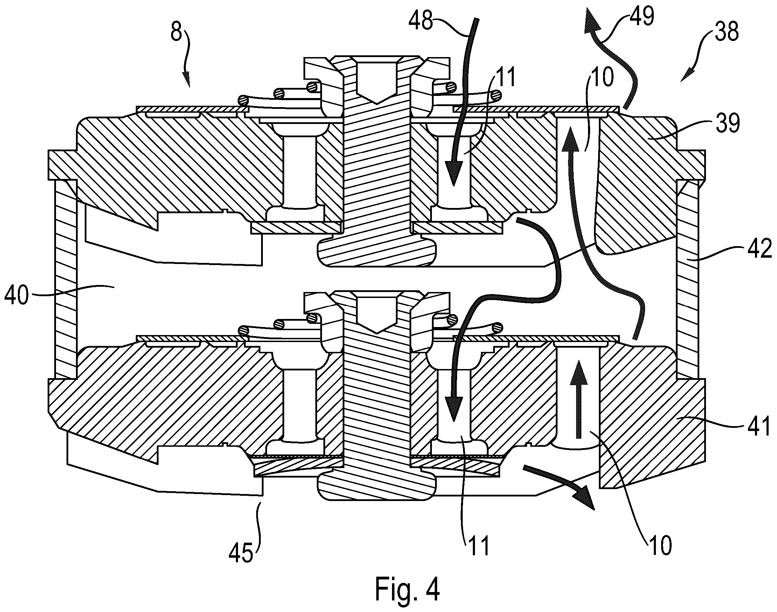

Die Fig. 3 und 4 zeigen Schnittdarstellungen eines Bodenventils 38, welches entsprechend einer zweiten Ausgestaltungsmöglichkeit der Erfindung ausgeführt ist und alternativ zu dem Bodenventil 2 bei dem Teleskopdämpfer 1 zur Anwendung kommen kann. Dabei entspricht das Bodenventil 38 dem Bodenventil 2 aus den Fig. 1 und 2 dahingehend, dass auch hier ein Ventilkörper 39 vorgesehen ist, durch welchen ein auf der ersten Seite 8 liegender Arbeitsraum eines Arbeitszylinders von einem auf der zweiten Seite 9 liegenden Teil eines Ausgleichsraumes abgeteilt werden kann. Zudem ist der Ventilkörper 39 des Bodenventils 38 in Übereinstimmung mit der Variante nach den Fig. 1 und 2 mit Bohrungen 10 und Drosselbohrungen 11 versehen, wobei ebenfalls in Übereinstimmung mit der Variante nach den Fig. 1 und 2 eine Abdeckscheibe 14, eine Drosselscheibe 17, ein Federelement 15, ein Schraubbolzen 12 mit Mutter 13 sowie Federscheiben 16 am Ventilkörper 39 vorgesehen sind. Hinsichtlich dieser Übereinstimmungen und deren Funktionsweise wird auf das zu Fig. 1 und 2 Beschriebene Bezug genommen.

Auf der zweiten Seite 9 des Ventilkörpers 39 wird ebenfalls ein Raum 40 eingegrenzt, wobei dies nun aber bei der Variante nach den Fig. 3 und 4 zwischen dem Ventilkörper 39 und einem Trennelement in Form eines weiteren Ventilkörpers 41 vorgenommen ist. Dabei Schließen der Ventilkörper 39 und der Ventilkörper 41 den Raum 40 gemeinsam mit einem hohlzylindrischen Verbindungselement 42 ein, über welches die Ventilkörper 39 und 41 aneinander befestigt sind. Das Verbindungselement 42 ist dabei seitens des Ventilkörpers 39 auf einen Befestigungsabschnitt 43 sowie seitens des Ventilkörpers 41 auf einen Befestigungsabschnitt 44 jeweils aufgeschoben, bevorzugt aufgepresst.

Der Ventilkörper 41 ist, abgesehen von der abweichenden Gestaltung im Bereich der Befestigungsabschnitte 43 und 44, identisch zu dem Ventilkörper 39 gestaltet und weist dementsprechend ebenfalls die Bohrungen 10 sowie die Drosselbohrungen 11 auf. Außerdem ist auch der Ventilkörper 41 mit einem Schraubbolzen 12 durchsetzt, welcher gegen den Ventilkörper 41 über eine Mutter 13 vorgespannt ist. An der Mutter 13 stützt sich ein Federelement 15 ab, über welches eine Abdeckscheibe 14 gegen den Ventilkörper 41 auf Seiten des Raumes 40 vorgespannt ist.

Durch den Ventilkörper 41 wird der Raum 40 von einem Ausgleichsbereich 45 abgeteilt, in welchem im verbauten Zustand des Bodenventils 38 der Teil des Ausgleichsraumes liegt. Dabei kann in den Raum 40 gelangtes Öl weiter in den Ausgleichsbereich 45 über Übergänge in Form der Drosselbohrungen 11 des Ventilkörpers 41 abströmen, wobei an Mündungen der Drosselbohrungen 11 des Ventilkörpers 41 auf Seiten des Ausgleichsbereichs 45 dabei eine Federscheibe 46 vorgesehen ist, die gemeinsam mit einer Fängerscheibe 47 radial innen zwischen dem Schraubbolzen bzw. der Niet 12 und dem Ventilkörper 41 gehalten ist. Dabei kann auch zwischen der Federscheibe 46 und dem Ventilkörper 41 eine Voröffnungsscheibe angeordnet sein. Hierbei kann sich die Federscheibe 46 und die ggf. zusätzlich verbaute Voröffnungsscheibe dann an der Fängerscheibe 47 anlegen, wenn Öl über die Drosselbohrungen 11 aus dem Raum 40 in den Ausgleichsbereich 45 geführt wird.

Durch das Eingrenzen des Raumes 40 zwischen den Ventilkörpern 39 und 41 kommt es in einer Druckstufe eines Teleskopdämpfers ebenfalls zu einem gestuften Druckabbau bei einer Ölführung von der ersten Seite 8 des Ventilkörpers 39 und damit dem hier liegenden Arbeitsraum zu dem Ausgleichsbereich 45 und damit dem hier liegenden Ausgleichsraum. Denn das Öl wird in der Druckstufe zunächst über die Drosselbohrungen 11 des Ventilkörpers 39 unter Drosselung in den Raum 40 geleitet, aus welchem das Öl dann im Weiteren über die Drosselbohrungen 11 des Ventilkörpers 41 unter geringerer Drosselung in den Ausgleichsbereich 45 abströmen kann. Dies ist in Fig. 4 anhand der Pfeile 48 angedeutet. Umgekehrt kann in einer Zugstufe des Teleskopdämpfers Öl aus dem Ausgleichsbereich 45 und damit dem hier liegenden Ausgleichsraum über die Bohrungen 10 der Ventilkörper 39 und 41 zu der ersten Seite 8 des Ventilkörpers 39 und damit dem hier liegenden Arbeitsraum nachgesaugt werden, wie in Fig. 4 anhand der Pfeile 49 angedeutet.

Mittels der erfindungsgemäßen Ausgestaltungen kann jeweils ein Bodenventil geschaffen werden, über welches bei Anwendung bei einem Teleskopdämpfer eine Geräuschreduzierung in einer Druckstufe des Teleskopdämpfers erreicht werden kann.

### Bezugszeichen

- 1: Teleskopdämpfer
- 2: Bodenventil
- 3: Arbeitszylinder
- 4: Ausgleichsraum
- 5: Teil
- 6: Arbeitsraum
- 7: Ventilkörper
- 8: erste Seite
- 9: zweite Seite
- 10: Bohrungen
- 11: Drosselbohrungen
- 12: Schraubbolzen / Niet
- 13: Mutter
- 14: Abdeckscheibe
- 15: Federelement
- 16: Federscheiben
- 17: Drosselscheibe
- 18: Ausnehmung
- 19: Trennelement
- 20: Raum
- 21: Ausgleichsbereich
- 22: hohlzylindrischer Abschnitt
- 23: Bodenabschnitt
- 24: Pressebereich
- 25: Übergang
- 26: Übergang
- 27: Durchbruch
- 28: Spalt
- 29: Ventilsitz
- 30: Pfeil
- 31: Spalt
- 32: Bodenbereich
- 33: Pfeil
- 34: Aussparung
- 35: Taschen
- 36: Bohrungen
- 37: Abdeckscheibe
- 38: Bodenventil
- 39: Ventilkörper
- 40: Raum
- 41: Ventilkörper
- 42: Verbindungselement
- 43: Befestigungsabschnitt
- 44: Befestigungsabschnitt
- 45: Ausgleichsbereich
- 46: Federscheibe
- 47: Fängerscheibe
- 48: Pfeil
- 49: Pfeil
- 50: Voröffnungsscheibe

## Patentansprüche

1. Bodenventil (2; 38) für einen Teleskopdämpfer (1), umfassend einen Ventilkörper (7; 39) mit einer ersten Seite (8) und einer zweiten Seite (9), wobei der Ventilkörper (7; 39) dazu ausgestaltet ist, in einem verbauten Zustand des Bodenventils (2; 38) im Teleskopdämpfer (1) einen auf der ersten Seite (8) liegenden Arbeitsraum (6) des Teleskopdämpfers (1) von einem auf der zweiten Seite (9) liegenden Teil (5) eines Ausgleichsraums (4) des Teleskopdämpfers (1) abzuteilen, wobei in dem Ventilkörper (7; 39) mindestens eine Drosselbohrung (11) ausgestaltet ist, über welche jeweils lediglich je eine Fluidströmung von der ersten Seite (8) des Ventilkörpers (7; 39) in Richtung der zweiten Seite (9) darstellbar ist, wohingegen je eine entgegengesetzte Fluidströmung über die mindestens eine Drosselbohrung (11) unterbunden ist, und wobei ein Trennelement (19) vorgesehen ist, welches gemeinsam mit dem Ventilkörper (7; 39) mindestens einen zwischenliegenden Raum (20; 40) begrenzt, **dadurch gekennzeichnet, dass** der mindestens eine zwischenliegende Raum (20; 40) zumindest an je einer, der zweiten Seite (9) des Ventilkörpers (7; 39) zugewandten Mündung der mindestens einen Drosselbohrung (11) begrenzt und dabei von einem Ausgleichsbereich (21; 45) abgegrenzt ist, in welchem im verbauten Zustand des Bodenventils (2; 38) im Teleskopdämpfer (1) der Teil (5) des Ausgleichsraums (4) vorgesehen ist, und dass zwischen dem mindestens einen zwischenliegenden Raum (20; 40) und dem Ausgleichsbereich (21; 45) Fluid über mindestens einen Übergang austauschbar ist.

2. Bodenventil (2) nach Anspruch 1, **dadurch gekennzeichnet, dass** das Trennelement (19) auf den Ventilkörper (7) auf dessen zweiter Seite (9) aufgesetzt ist, wobei der mindestens eine Übergang als je ein permanenter Übergang (25, 26) jeweils ein Strömen von Fluid aus dem mindestens einen zwischenliegenden Raum (20) in den Ausgleichsbereich (21) unter Strömungsumlenkung dieses Fluids ermöglicht.

3. Bodenventil (2) nach Anspruch 2, **dadurch gekennzeichnet, dass** das Trennelement (19) topfartig gestaltet und in eine Ausnehmung (18) eingesetzt ist, mit welcher der Ventilkörper (7) auf der zweiten Seite (9) versehen ist und in der die mindestens eine Drosselbohrung (11) mündet.

4. Bodenventil (2) nach Anspruch 3, **dadurch gekennzeichnet, dass** das topfartige Trennelement (19) einen hohlzylindrischen Abschnitt (22) aufweist, an welchen sich ein radial verlaufender Bodenabschnitt (23) anschließt, wobei das Trennelement (19) über den hohlzylindrischen Abschnitt (22) in der Ausnehmung (18) des Ventilkörpers (7) gehalten, bevorzugt in die Ausnehmung (18) des Ventilkörpers (7) eingepresst ist.

5. Bodenventil (2) nach Anspruch 4, **dadurch gekennzeichnet, dass** der je eine permanente Übergang (25) durch einen Durchbruch (27) gebildet ist, mit welchem der Bodenabschnitt (23) des Trennelements (19) versehen ist, wobei die Strömungsumlenkung dadurch verwirklicht ist, dass der Durchbruch (27) zu je einer Fluidausströmrichtung, welche an der je einen Mündung der mindestens einen Drosselbohrung (11) definiert ist, radial zurückgesetzt liegt.

6. Bodenventil (2) nach Anspruch 4 oder 5, **dadurch gekennzeichnet, dass** der je eine permanente Übergang (26) einen Spalt (31) aufweist, welcher zwischen dem hohlzylindrischen Abschnitt (22) und einem Bodenbereich (32) der Ausnehmung (18) des Ventilkörpers (7) ausgestaltet ist, wobei über den Spalt (31) eine Durchgang in eine Aussparung (34) besteht, mit welcher der hohlzylindrische Abschnitt (22) radial außen versehen ist, wobei der hohlzylindrische Abschnitt (22) die Strömungsumlenkung von in den Spalt (31) einströmendem und in die Ausnehmung (18) weiterströmendem Fluid hervorruft.

7. Bodenventil (2) nach Anspruch 6, **dadurch gekennzeichnet, dass** über die Aussparung (34) je eine Verbindung zu mindestens einer Tasche (35) hergestellt ist, mit welcher der Ventilkörper (7) auf der zweiten Seite (9) versehen ist und die mit dem Ausgleichsbereich (21) verbunden ist.

8. Bodenventil (2) nach einem der Ansprüche 2 bis 7, **dadurch gekennzeichnet, dass** in das Trennelement (19) mindestens eine Bohrung (36) eingebracht ist, über welche jeweils lediglich je eine Fluidströmung von dem Ausgleichsbereich (21) in den mindestens einen zwischenliegenden Raum (20) darstellbar ist, wohingegen je eine entgegengesetzte Fluidströmung über die mindestens eine Bohrung (36) von dem mindestens einen zwischenliegenden Raum (20) in den Ausgleichsbereich (21) unterbunden ist.

9. Bodenventil (38) nach Anspruch 1, **dadurch gekennzeichnet, dass** das Trennelement als ein weiterer Ventilkörper (41) vorliegt, welcher den mindestens einen zwischenliegenden Raum (40) auf der zweiten Seite (9) des Ventilkörpers (39) von dem Ausgleichsbereich (45) abteilt, wobei je eine Durchgangsöffnung im weiteren Ventilkörper (41) den mindestens einen Übergang bildet.

10. Bodenventil (38) nach Anspruch 9, **dadurch gekennzeichnet, dass** der Ventilkörper (39) und der weitere Ventilkörper (41) zumindest weitestgehend identisch gestaltet sind.

11. Bodenventil (38) nach Anspruch 9 oder 10, **dadurch gekennzeichnet, dass** die je eine, den mindestens einen Übergang bildende Durchgangsöffnung eine Drosselbohrung (11) des weiteren Ventilkörpers (41) ist, welche jeweils einerseits in dem mindestens einen zwischenliegenden Raum (40) sowie andererseits in dem Ausgleichsbereich (45) mündet.

12. Bodenventil (38) nach einem der Ansprüche 9 bis 11, **dadurch gekennzeichnet, dass** an einer jeweiligen Mündung der je einen Durchgangsöffnung des weiteren Ventilkörpers (41) in dem Ausgleichsbereich (45) zumindest eine Federscheibe (46) angeordnet ist, welche an der jeweiligen Mündung derje einen Durchgangsöffnung federnd auf dem weiteren Ventilkörper (41) aufliegt.

13. Bodenventil (38) nach einem der Ansprüche 9 bis 12, **dadurch gekennzeichnet, dass** der Ventilköper (39) und der weitere Ventilkörper (41) über ein hohlzylindrisches Verbindungselement (42) miteinander verbunden sind.

14. Bodenventil (2; 38) nach einem der vorhergehenden Ansprüche, **dadurch gekennzeichnet, dass** der Ventilkörper (7; 39) zudem mit mindestens einer Bohrung (10) versehen ist, welche an der ersten Seite (8) mündet, wobei an der jeweiligen Mündung der mindestens einen Bohrung (10) an der ersten Seite (8) des Ventilkörpers (7; 39) eine Abdeckscheibe (14) platziert ist, welche die jeweilige Mündung bei einer Fluidströmung von der ersten Seite (8) zu dem Ausgleichsbereich (21; 45) abdeckt sowie bei einer hierzu entgegengesetzten Fluidströmung von dem Ausgleichsbereich (21; 45) zu der ersten Seite (8) freigibt.

15. Bodenventil (2; 38) nach einem der vorhergehenden Ansprüche, **dadurch gekennzeichnet, dass** an der jeweiligen Mündung der mindestens einen Drosselbohrung (11) des Ventilkörpers (7; 39) im mindestens einen zwischenliegenden Raum (20; 40) mindestens eine Federscheibe (16) vorgesehen ist, welche jeweils an der jeweiligen Mündung der mindestens einen Drosselbohrung (11) federnd an dem Ventilkörper (7; 39) aufliegt.

16. Teleskopdämpfer (1), insbesondere Fahrwerkschwingungsdämpfer, umfassend ein Bodenventil (2; 38) nach einem der Ansprüche 1 bis 15.
